## Europäisches Patentamt

## European Patent Office

## Office européen des brevets

(11) Publication number: **0 105 460**
**B1**

# EUROPEAN PATENT SPECIFICATION

(45) Date of publication of patent specification: **16.12.87**

(51) Int. Cl.⁴: **C 04 B 37/00,** G 11 B 5/235

(21) Application number: **83109670.6**

(22) Date of filing: **28.09.83**

(54) Method of bonding ceramic bodies together with glass.

(30) Priority: **06.10.82 US 433185**

(43) Date of publication of application:
**18.04.84 Bulletin 84/16**

(45) Publication of the grant of the patent:
**16.12.87 Bulletin 87/51**

(84) Designated Contracting States:
**DE FR GB**

(56) References cited:
EP-A-0 077 881
GB-A-1 280 127
US-A-3 795 954
US-A-3 954 434

PATENTS ABSTRACTS OF JAPAN, vol. 2, no.
42, March 20, 1978, page 412 E 78

(73) Proprietor: **International Business Machines
Corporation
Old Orchard Road
Armonk, N.Y. 10504 (US)**

(72) Inventor: **Argumedo, Armando Jesus
9511 E Fifth St.
Tucson Arizona 85710 (US)**
Inventor: **Gniewek, John James
6025 Wendrew Lane
Tucson Arizona 85711 (US)**
Inventor: **Powell, Jimmie Lee
33 Tor Road
Wappingers Falls New York (US)**
Inventor: **Rigby, Eugene Bertrand
2120 N Klondike Drive
Tucson Arizona 85715 (US)**

(74) Representative: **Hobbs, Francis John
IBM United Kingdom Limited
Intellectual Property Department
Hursley Park Winchester
Hampshire SO21 2JN (GB)**

Courier Press, Leamington Spa, England.

# Description

The present invention relates to the bonding of ceramic bodies together with glass. The method of the present invention is especially useful for fabricating ferrite recording heads or transducers for electromagnetic recording devices.

The use of glass to join ceramic bodies together is widely practised. In particular, magnetic recording heads are fabricated by bonding separate ceramic ferrite parts together by placing a layer of glass on the mating surfaces to be joined. The assembly is then subjected to elevated temperatures to a point where the glass melts and begins to flow. Upon cooling, the glass bonds the ceramic surfaces together.

GB—A—1 280 127 discloses a process for filling the gap in ferrite magnetic head with glass in which process the ferrite is preheated to the flow temperature of the glass whereupon molten glass is applied to the ferrite. The assembly is then rapidly cooled at a rate of from 8°C per minute to 20°C per minute to the highest annealing temperature of the glass. It is subsequently cooled at a slower rate, eg a little less than 5°C per minute to room temperature.

In many instances tensile stress occurs in the ceramic-glass seal which if sufficiently high, can in turn, result in cracking of the glass seal. This problem is particularly pronounced in structures such as magnetic recording heads in which the volume of glass employed is relatively small compared with the surface area of the glass, thereby producing a different type of glass from that originally present. Accordingly, even though the glass for sealing is selected such that its expansion matches, as close as possible, that of the ceramic material, the dissolution of ferrite into the glass changes the expansion characteristics of the glass so that the expansion coefficient of the surrounding ferrite ceramic does not match that of the glass, thereby resulting in localised high stress areas.

If the expansion curve of the glass lies above that of the ceramic at room temperature, the glass is in compression. On the other hand, if the glass expansion curve is below that of the ceramic at room temperature, the glass will be in tension. Glass is more susceptible and sensitive to cracking when under tensile stresses. Accordingly, it is desirable to select glass with a slightly lower expansion coefficient than that of the contacting ceramic in order to achieve a compression seal. Of course, it would be desirable to have the glass and ceramic expansion curves match each other as closely as possible during the entire temperature cool-down range to ensure minimum mismatch at any particular temperature. However, to date, it has not been possible to provide a glass which would exactly match that of the preferred ferrites employed in magnetic recording devices such as nickel-zinc ferrite and manganese-zinc ferrite. This is further complicated by the fact that the ferrite surfaces are usually of a complex and complicated structure containing slots or other features. The glass in the ferrite slots or other areas where there is a high glass-ferrite surface to glass volume ratio is chemically changed from its original composition as mentioned hereinabove by dissolution of the ferrite into the glass.

Accordingly, a continuing problem has been glass cracking within the slot areas of the glass-ferrite write closures in the manufacture of magnetic heads, which has consistently resulted in low fabrication yields.

The invention seeks to provide a method which significantly reduces the frequency of the occurrence of cracks in the glass bond of ceramic surfaces by producing a bond having low stress at ambient temperature. We have discovered that quick cooling of the molten glass from the low stress anneal temperature to normal room temperature at a rate greater than about 6°C/minute results in a significant reduction of stress and cracking of the glass bond.

A method of bonding ceramic bodies together with glass comprising the steps of placing the ceramic bodies so that the surfaces to be bonded are adjacent each other, providing glass adjacent to the surfaces to be bonded, applying heat to cause the glass to melt and flow between the surfaces to be bonded and cooling the glass to ambient temperature is characterised, according to the invention, by holding the structure at a low stress anneal temperature of the molten glass having dissolved ceramic particles from the surfaces to be bonded contained therein, in order to remove stresses, and then cooling the structure from said low stress anneal temperature to ambient temperature at a rate of at least 6°C per minute and not greater than 15°C per minute.

The invention is particularly useful for bonding ferrite bodies together with glass. A preferred application of the invention is in the bonding of ferrite materials suitable for the fabrication of magnetic recording transducers.

The term "ferrite", as used herein, refers to materials which are made for high-frequency applications having a characteristic magnetite structure and composed of solid solutions of iron oxide and one or more oxides of other metals such as manganse, zinc, magnesium, copper nickel, and cobalt. Ferrites physically resemble ceramics and have outstanding magnetic properties at high frequencies. In addition, ferrites have very high resistivities, ranging from about $10^2$ ohm-cm to as high as $10^{11}$ ohm-cm. They are also highly resistant to corrosion.

The preferred ceramic materials are nickel-zinc ferrite and manganese-zinc ferrite. In particular, nickel-zinc ferrite materials employed have an average coefficient of thermal expansion of about $90 \times 10^{-7}$/°C. An example of such a material contains about 60.6% by weight of $Fe_2O_3$, about 11.1% by weight of NiO, and about 22.3% by weight of ZnO. An example of a manganese-zinc ferrite material is one having a composition of about 51% by weigth of $Fe_2O_3$, about 25% by weight of $MnO_2$, and about 24% by weight of ZnO.

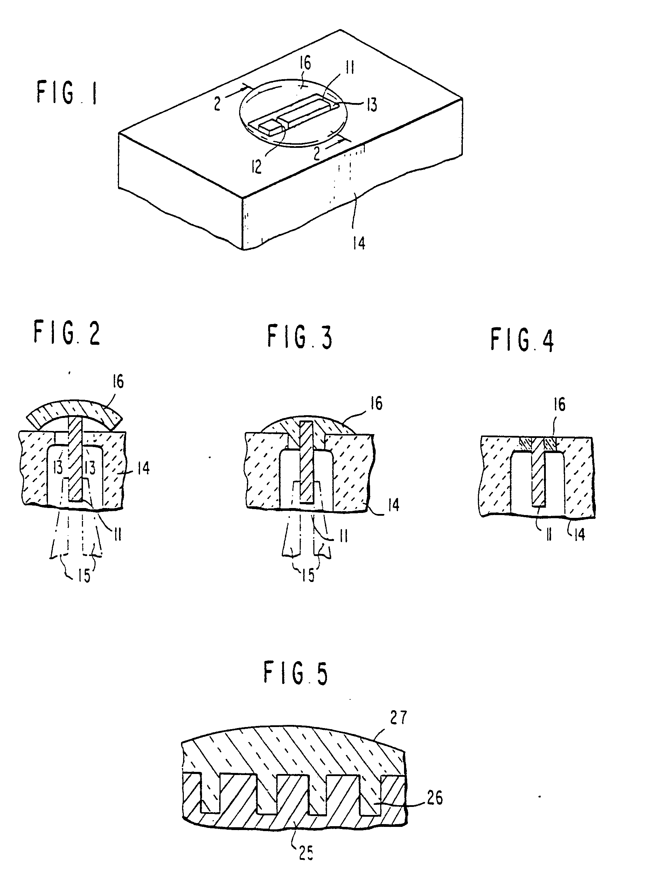

How the invention can be carried out will now be described by way of example, with reference to the accompanying drawings, in which:-Figure 1 is a perspective view, broken away, of the principal elements of an assembly which can be prepared in accordance with the method of the present invention;

Figures 2—4 are sectional side views, taken along the line 2—2 of Figure 1, broken away, of successive stages in a method in accordance with the present invention;

Figure 5 is a front view of a section of a slotted structure used to test for stress; and

Figures 6—11 are graphs of anneal temperature v. deflection as an indication of tensile stress for various conditions of cooling.

The ceramic surfaces to be bonded together are placed adjacent each other in the desired configuration, and glass is provided adjacent the ceramic surfaces. The particular glass employed is selected so that it matches, as closely as possible, the expansion curve for the ceramic. Preferably, the expansion curve of the glass should lie above that of the ceramic at room temperature so that the glass is in compression upon cooling to room temperature from the set point. The glass employed is a relatively low melting point glass and must have a melting point lower than that of the ceramic. The glasses employed in practising the present invention, generally have a softening point of less than about 800°C.

As stated hereinabove, the particular glass employed is selected so that it matches, as close as possible, the expansion rate of the ferrite employed. For instance, as suggested in US—A—3,750,274, when employing a manganese-zinc ferrite, such as J-ferrite, manufactured and supplied by Magnetics, Incorporated of Butler, Pennsylvania, the glass to employ has a melting temperature under about 550°C, and a high concentration of lead such as glass code number 8363, manufactured by Corning Glassware, Incorporated. Such glass melts at a temperature as low as 460°C with a rate of expansion of about $10.4 \times 10^{-6}$ cm per cm per degree C (between 0°C and 300°C) as compared with a typical manganese-zinc ferrite expansion rate of about $9.8 \times 10^{-6}$ cm per cm per degree C (between about 0°C and 550°C).

Glass suitable for bonding nickel-zinc ferrite and particularly, that having a coefficient of thermal expansion of the order of about $90 \times 10^{-7}$/°C is disclosed in US—A—3,639,976. In particular, typical glasses that can be employed are PbO-$Al_2O_3$-$B_2O_3$-$SiO_2$, and PbO-ZnO-$B_2O_3$ (with additions of $SiO_2$ or $Al_2O_3$). Such glasses are generally characterized as low temperature nondevitrifying glasses with softening points in the range of about 450°C—500°C. Lead oxide is the principle component in such compositions and is usually present in amounts of about 50 to about 80% by weight. A particularly suitable lead-alumina-borosilicate glass contains about 73.4% by weight of PbO, about 5.1% by weight of $Al_2O_3$, about 6.3% by weight of $B_2O_3$, and about 15.2% by weight of $SiO_2$. A preferred glass employed with the above-identified nickel-zinc ferrite contains about 68±0.5% by weight PbO, about 4.2±1.5% by weight of $Al_2O_3$, about 7±1.5% by weight of $B_2O_3$, and about 20.8± by weight $SiO_2$.

The glass and ceramic surfaces are heated to a temperature greater than the low stress anneal temperature of the glass having dissolved ceramic particles from the ceramic surfaces contained therein, thereby causing the molten glass to flow between the ceramic surfaces. The heating is generally conducted in air and under atmospheric pressure. The particular low stress anneal temperature can be readily determined by persons skilled in the art by routine experimentation with the particular glass and substrates to be employed. The term "low stress anneal temperature" as used herein refers to the annealing point of the glass as tentatively adopted by the American Society for Testing Materials. In particular, annealing point is the temperature, at the upper end of the annealing range, at which the internal stress is substantially relieved in a matter of minutes. The annealing point corresponds to a viscosity of about $10^{13}$ poises ($10^{12}$ Pa · s), when measured by the tentative method of tests for annealing point and strain point of glass (A.S.T.M. designation: C.336).

The glass must be heated to a temperature above the annealing point and preferably to a temperature at least about the softening point of the glass with the ceramic particles contained therein. The softening point of the glass, as tentatively adopted by the American Society for Testing Materials, is the temperature at which a uniform fiber, 0.55 to 0.75 mm in diameter and 23.5 cm in length, elongates under its own weight at a rate of 1 mm per minute when the upper 10 cm of its length is heated in the manner prescribed in the "tentative method of tests for softening point of glass" (A.S.T.M. designation: C.338) at a rate of approximately 5°C per minute. For glass of density near 2.5 grams/cm$^3$, this temperature corresponds to a viscosity of $10^{7.6}$ poises ($10^{6.6}$ Pa · s). At the softening point, the glass deforms very rapidly and starts to adhere to other bodies.

The strain point of glass is the temperature, at the lower end of the annealing range, at which the internal stress is substantially relieved in a matter of hours. The strain point corresponds to a viscosity of approximately $10^{14.5}$ poises ($10^{13.5}$ Pa.s) when measured by the "tentative method of tests for annealing point and strain point of glass" (A.S.T.M. designation: C.336). In gerneral, the strain point represents the extreme upper limit of servicability for annealed glass. In addition, the working point of glass is the temperature where the glass is soft enough for hot working by most of the common methods. Viscosity at the working point is approximately $10^4$ poises ($10^3$ Pa.s).

The heating causes the molten glass to flow between the ceramic surfaces. In the case of a somewhat complicated structure, as employed in the fabrication of magnetic recording transducers having slotted portions, the molten glass fills up the slots. After the molten glass is caused to flow between the ceramic surfaces, it can be cooled down to the low stress anneal temperature from the temperature to which it was heated. The cooling is generally conducted at a rate of about 1 to about 15°C/minute. Next, in order to remove stresses which may have previously been present in the glass due to prior heating history, the glass is held at the low stress anneal temperature or annealing point, generally for about 0.5 to about 2 hours.

The molten glass is then cooled rapidly to ambient temperature from about the annealing point at a rate of at least 6°C per minute. The cooling is preferably at the anneal point, but can deviate therefrom ± about 3°C without significantly adversely affecting the process of the present invention.

It is critical in order to achieve the desired results to employ a cooling rate of at least 6°C per minute. Cooling rates of greater than 15°C are not employed. In addition, it is essential to begin the quick cooling from approximately the annealing point or, as referred to herein, the low stress annealing temperature. As will be illustrated hereinbelow, cooling at 4°C per minute does not provide the results achieved by the present invention.

Figure 1 illustrates in perspective a ferrite head 11, glass gapped at 12, which head is to be bonded within the slot 13 of a supporting structure or slider 14. The head 11 is to be used for reading and erasing information on a magnetic recording surface such as a disc. Figures 2—4 are progressive sectional side views taken along the line 2—2 of Figure 1 broken away, of the bonding steps utilized in the present invention. Reference to Figure 2 illustrates placing the head 11 within slot 13 and holding it there in alignment relative to slider 14. This can be maintained by employing a clamping assembly shown in phantom at 15. A low temperature glass 16 is located on top of slider 14 over slot 13. The glass and ceramic are subsequently subjected to the heat treatment of the present invention and, as illustrated in Figure 3, the glass flows into the slots and subsequently bonds head 11 in slot 13. Subsequent to this, the clamping assembly 15 is removed and the protruding glass and ferrite head are ground and polished as indicated in Figure 4 to the desired height and smoothness.

The following non-limiting examples are presented to further illustrate the present invention.

Example 1

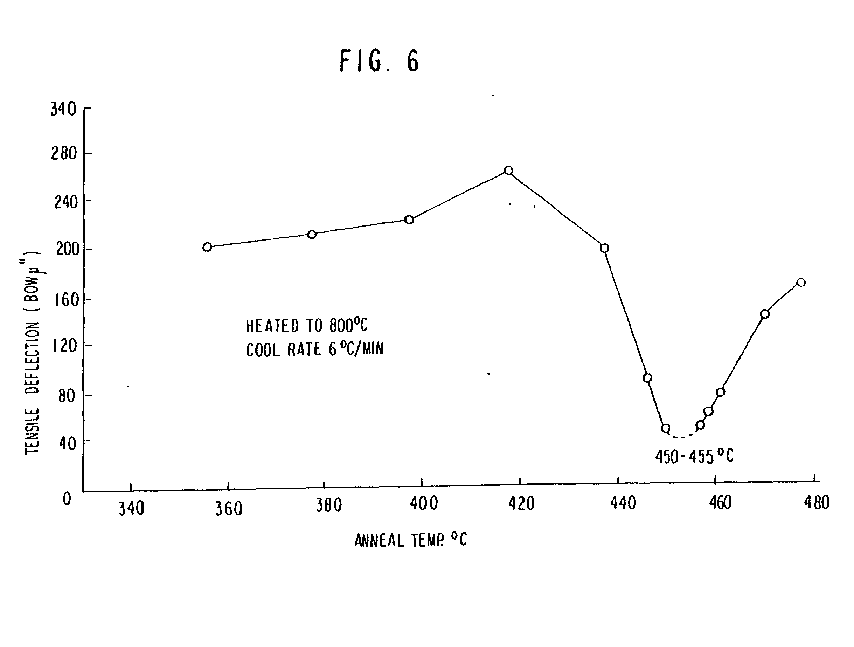

A test structure, a section of which is shown in Figure 5, wherein 25 represents the ferrite surfaces, 26 represents the glass bond in the slot, and 27 represents the dome glass is prepared. The stress within the closure is measured in this example and in all of the following examples by removing the dome glass, for example, by polishing and grinding. Next, a Clevite brush analyzer is used to measure the surface curvature of a polish closure slab containing a 15.5 mm relief slot. The greater the surface concave curvature, the greater the overall tensile strength in the glassed area. This is referred to as the bend test.

A nickel-zinc ferrite having about 22.3% by weight of ZnO, about 11.1% by weight of NiO, and about 66.6% by weight of $Fe_2O_3$ is provided with slots as illustrated in Figure 5. The slots are about 0.90 mm deep. A glass piece, having a composition of about 20.8% by weight of $SiO_2$, about 7% by weight of $B_2O_3$, about 4.2% by weight of $Al_2O_3$, and about 68% by weight of PbO is placed adjacent the ferrite structure and melted at about 800°C at one atmosphere under air. The structure is then cooled at a rate of about 8°C per minute to various "anneal" temperatures and held there for about one hour. Then the structure is cooled to room temperature at a rate of about 6°C/minute from the various "anneal" temperatures and the bow μ is measured to provide a measurement of the stress. Figure 6 shows various stress points measured at different "anneal " temperatures employed in this procedure. As can be observed, the preferred anneal temperature for this particular glass in combination for the particular ferrite employed is 453±3°C. Such anneal temperature as the starting point for the quick cool provides a minimum amount of stress. As can be appreciated, for any particular combination of glass and ceramic, it is relatively easy to determine the preferred anneal temperature to be employed once a person skilled in the art is aware of the present disclosure. As can be appreciated, employing the preferred anneal temperature, a deflection of 0—40μ resulting from stress can be achieved. On the other hand, in the normal slow cooling, as practised in the prior art, such as about 2°C per minute rate, tensile deflection levels of about 250μ are achieved.

Comparison Example 2

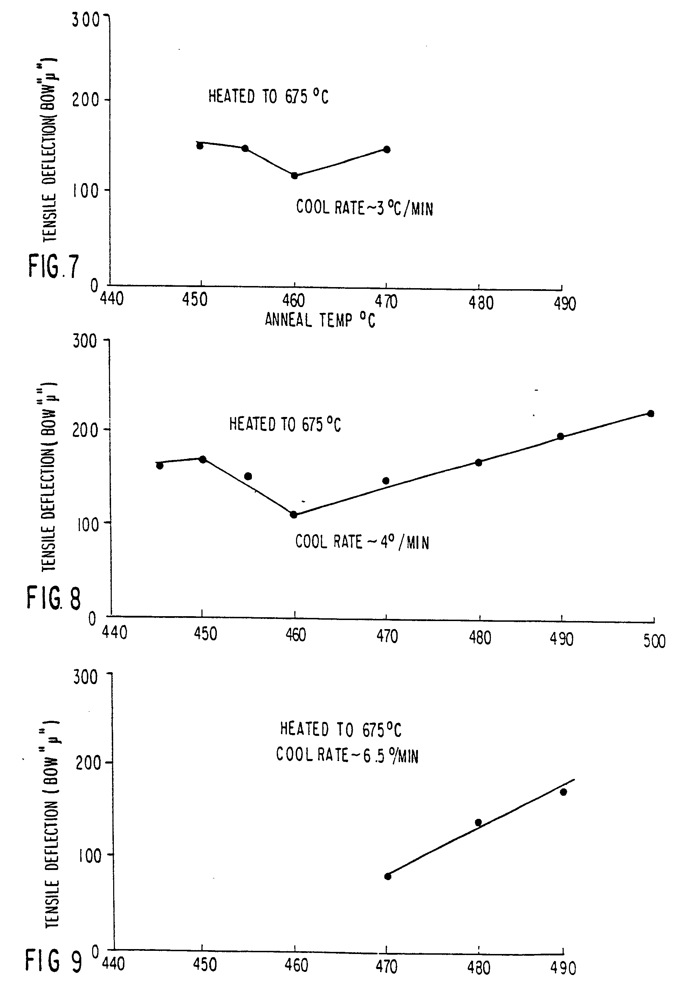

Example 1 is repeated, except that the glass is heated up to only 675°C, a pressure of $6.9 \times 10^6$ Pascals (1000 psi) is applied during the cooling down to the anneal temperature and, the cooling rate from the anneal temperature is only 3°C per minute. The increased pressure is employed to assure against the presence of bubbles in the glass. The pressure is provided by an inert argon atmosphere. The results obtained are shown in Figure 7. As can be appreciated from the curve in Figure 7. The minimum tensile curve versus the temperature of quick cool is significantly flatter than when practising the present invention. Moreover, the minimum strees obtained (about 120μ deflection) is significantly greater than that achieved by the present invention.

Comparison Example 3

Example 2 is repeated, except that the pressure during the cooling down to the anneal temperature is about $1.4 \times 10^7$ Pascals (2000 psi). The cooling rate in this example is about 4°C per minute. The results obtained at the various anneal temperatures are illustrated in Figure 8. As apparent from the results achieved in Figure 8, the deflection of about 110μ is significantly greater than that achieved according to the present invention.

Example 4

Example 1 is repeated, except that the initial cooling down to the annual temperatures from about 675°C is conducted under $2.8 \times 10^7$ Pascals (4000 psi) and the cooling rate from the anneal temperature down to room temperature is about 6.5°C per minute. In addition, the glass is heated to 675°C rather than 800°C. The results are illustrated in Figure. 9.

Example 5

Part A

Example 1 is repeated, except that the cooling down to the anneal temperatures is conducted under an inert argon pressure of about $4.1 \times 10^7$ Pascals (6000 psi). The best results of 20μ are achieved at about 474°C.

Part B

Part A is repeated, except that the initial temperature to which the glass is heated is only 675°C.

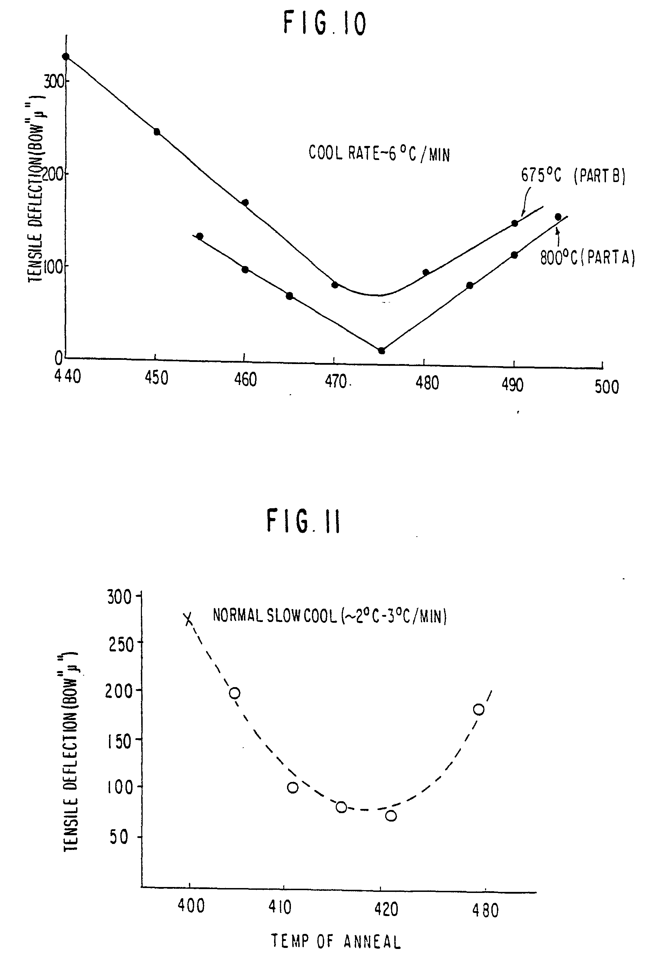

The results are shown in Figure 10. The comparison of Part A and Part B of this Example illustrates the effect of prior glass history to the stress characteristics. In particular, the actual deflection measurements resulting from tensile stress are greater for the sample previously heated to only 675°C as compared to that for the sample heated originally to 800°C.

Example 6

A test structure, a section of which is shown in Figure 5, wherein 25 represents the ferrite surfaces, 26 represents the glass bond in the slot, and 27 represents the dome glass is prepared. The stress within the closure is measured in this example by removing the dome glass such as by polishing and grinding. Next, a Clevite brush analyzer is used to measure the surface curvature of a polish closure slab containing a 15.5 mm relief slot. The greater the surface concave curvature, the greater the overall tensile stress in the glassed area. This is referred to as the bend test.

A manganese-zinc ferrite having an anneal point of about 435°C, a softening point of about 538°C, a working point of about 695°C, and an average expansion coefficient of $71 \pm 2 \times 10^{-7}/°C$ (25—300°C) is provided with slots as illustrated in Figure 5. The slots are about 0.9 mm deep. A glass piece, available under the trade designation Corning 1416, and having an anneal point of about 386°C, about 463°C, about 583°C, and an average expansion coefficient of about $81 \times 10^{-7}/°C$ (25—300°C) is placed adjacent the ferrite structure and melted at about 800°C at one atmosphere under air. The structure is then cooled at a rate of about 8°C per minute under $3.5 \times 10^7$ Pascals (5000

psi) argon atmosphere to various "anneal" temperatures and held there for about one hour. Then the structure is cooled to room temperature at a rate of about 6°C/minute under atmospheric pressure from the various "anneal" temperatures and the bow μ is measured to provide a measurement of the stress. Figure 11 shows various deflection points measured at different "anneal" temperatures employed in this procedure.

Point X on the curve shows the deflection for cooling at a rate of about 3°C.

## Claims

1. A method of bonding ceramic bodies together with glass comprising the steps of placing the ceramic bodies so that the surfaces to be bonded are adjacent each other, providing glass adjacent to the surfaces to be bonded, applying heat to cause the glass to melt and flow between the surfaces to be bonded and cooling the structure to ambient temperature, characterised by holding the structure at a low stress anneal temperature of the molten glass having dissolved ceramic particles from the surfaces to be bonded contained therein, in order to remove stresses, and then cooling the structure from said low stress anneal temperature to ambient temperature at a rate of at least 6°C per minute and not greater than 15°C per minute.

2. A method as claimed in claim 1, in which the glass is cooled from the low stress anneal temperature to ambient temperature at a rate of up to about 10°C per minute.

3. A method as claimed in claim 1 or claim 2, in which the ceramic bodies are of ferrite.

4. A method as claimed in claim 3, in which the ceramic bodies are of nickel-zinc ferrite.

5. A method as claimed in claim 3, in which the ceramic bodies are of manganese-zinc ferrite.

6. A method as claimed in any preceding claim, in which the cooling is carried out under atmospheric pressure in air.

## Patentansprüche

1. Verfahren zum Verbinden von Keramikteilen mittels Glas, wobei

—die Keramikteile so angeordnet werden, daß die zu verbindenden Flächen nebeneinander liegen;

—Glas neben den zu verbindenden Flächen bereitgehalten wird;

—dem Glas Wärme zugeführt wird, so daß es schmilzt und zwischen die zu verbindenden Fläche fließt; und

—wobei die Verbindung auf Umgebungstemperatur abgekühlt wird, dadurch gekennzeichnet, daß die Verbindung auf einer spannungsarmen Auskühltemperatur des geschmolzenen Glases gehalten wird, welches von den zu verbindenden Flächen gelöste keramische Teilchen beinhaltet, so daß Spannungen vermieden werden, und daß die Verbindung von dieser spannungsarmen Auskühltemperatur mit einer Geschwindigkeit von mindestens 6°C pro Minute, jedoch nicht mehr als 15°C pro Minute auf Umgebungstemperatur abgekühlt wird.

2. Verfahren nach Anspruch 1, dadurch gekennzeichnet, daß das Glas von der Spannungsarmen Auskühltemperatur mit einer Geschwindigkeit von bis zu ca. 10°C pro Minute auf Umgebungstemperatur abgekühlt wird.

3. Verfahren nach Anspruch 1 oder 2, dadurch gekennzeichnet, daß die Keramikteile aus Ferrit bestehen.

4. Verfahren nach Anspruch 3, dadurch gekennzeichnet, daß die Keramikteile aus Nickel-Zink-Ferrit bestehen.

5. Verfahren nach Anspruch 3, dadurch gekennzeichnet, daß die Keramikteile aus Mangan-Zink-Ferrit bestehen.

6. Verfahren nach einem der vorhergehenden Ansprüche, dadurch gekennzeichnet, daß die Abkühlung unter atmosphärischem Druck in Luft durchgeführt wird.

**Revendications**

1. Procédé de liaison de corps céramiques l'un à l'autre avec du verre, comprenant les étapes de disposition des corps céramiques de manière que les surfaces à lier soient adjacentes, de placement de verre en contiguïté avec les surfaces à lier, d'application de chaleur pour provoquer la fusion du verre et l'écoulement de celui-ci entre les surfaces à lier, et de refroidissement de la structure à la température ambiante, caractérisé par le maintien de la structure à une température de recuit de détente du verre fondu contenant des particules de céramique dissoutes provenant des surfaces à lier, afin d'éliminer les tensions, et ensuite le refroidissement de la structure, de ladite température de recuit de détente à la température ambiante, à une vitesse d'au moins 6°C par minute et n'excédant pas 15°C par minute.

2. Procédé selon la revendication 1, dans lequel le verre est refroidi, de la température de recuit de détente à la température ambiante, à une vitesse allant jusqu'à environ 10°C par minute.

3. Procédé selon la revendication 1 ou la revendication 2, dans lequel les corps céramiques sont en ferrite.

4. Procédé selon la revendication 3, dans lequel les corps céramiques sont en ferrite de nickel-zinc.

5. Procédé selon la revendication 3, dans lequel les corps céramiques sont en ferrite de manganèse-zinc.

6. Procédé selon l'une quelconque des revendications précédentes, dans lequel le refroidissement est effectué à l'air, à la pression atmosphérique.

FIG. 1

FIG. 2

FIG. 3

FIG. 4

FIG. 5

FIG. 6

HEATED TO 800°C
COOL RATE 6°C/MIN

450-455°C

TENSILE DEFLECTION ( BOW $\mu$" )

ANNEAL TEMP. °C

0 105 460

2

FIG. 7

HEATED TO 675 °C

COOL RATE ~3 °C/MIN

TENSILE DEFLECTION (BOW " μ ")

ANNEAL TEMP °C

FIG. 8

HEATED TO 675 °C

COOL RATE ~ 4° /MIN

TENSILE DEFLECTION ( BOW " μ ")

FIG 9

HEATED TO 675 °C
COOL RATE ~ 6.5 %/MIN

TENSILE DEFLECTION ( BOW " μ ")

# FIG. 10

# FIG. 11